# FASCICULE DE BREVET EUROPEEN

(11) **EP 2 567 431 B1**
(45) Date de publication et mention de la délivrance du brevet: **07.06.2017**
(21) Numéro de dépôt: 11723561.4
(22) Date de dépôt: 04.05.2011
(51) Int. Cl.: H01S 3/10, H01S 3/05, H01S 3/23, H01S 3/07, H01S 3/106, H01S 5/14, H01S 3/11, H01S 3/08, H01S 3/082

(54) **CAVITÉ LASER À EXTRACTION CENTRALE PAR POLARISATION POUR COUPLAGE COHÉRENT DE FAISCEAUX INTRACAVITÉ INTENSES**
LASERKAVITÄT MIT ZENTRALER EXTRAKTION MITTELS POLARISATION FÜR KOHÄRENTE KOPPLUNG VON INTENSIVEN INTRAKAVITÄTSSTRAHLEN
LASER CAVITY WITH CENTRAL EXTRACTION BY POLARISATION FOR COHERENT COUPLING OF INTENSE INTRA-CAVITY BEAMS

(30) Priorité: 07.05.2010 FR 1001963
(43) Date de publication de la demande: 13.03.2013
(73) Titulaire: Compagnie Industrielle des Lasers Cilas, 45100 Orléans (FR); Airbus Safran Launchers SAS, 75015 Paris (FR)
(72) Inventeur: SABOURDY, David, F-45000 Orléans (FR); MONTAGNE, Jean-Eucher, F-45000 Orléans (FR); BARTHELEMY, Alain, F-87100 Limoges (FR); DESFARGES-BERTHELEMOT, Agnes, F-87270 Couzeix (FR); KERMENE, Vincent, F-87700 Aixe Sur Vienne (FR); AUROUX, Sandrine, F-87100 Limoges (FR); GUILLOT, Julien, F-87500 Ladignac Le Long (FR); SERREAULT, Brigitte, F-92330 Sceaux (FR); ESMILLER, Bruno, F-78670 Villennes Sur Seine (FR)
(74) Mandataire: Gevers & Orès
(86) Numéro de dépôt international: PCT/FR2011/051009
(87) Numéro de publication internationale: WO 2011/138559

(56) Documents cités:
- EP-A2- 0 587 154
- WO-A1-98/56087
- DE-A1- 19 920 033
- US-A- 5 793 784
- TONDUSSON M ET AL: "Coherent combination of four laser beams in a multi-axis Fourier cavity using a diffractive optical element; Coherent combination of four laser beams in a multi-axis Fourier cavity using a diffractive optical element", JOURNAL OF OPTICS. A, PURE AND APPLIED OPTICS, INSTITUTE OF PHYSICS PUBLISHING, BRISTOL, GB, vol. 3, no. 6, 1 novembre 2001 (2001-11-01), pages 521-526, XP020080811, ISSN: 1464-4258, DOI: DOI:10.1088/1464-4258/3/6/316
- SARKIES ET AL: "A stable YAG resonator yielding a beam of very low divergence and high output energy", OPTICS COMMUNICATIONS, NORTH-HOLLAND PUBLISHING CO. AMSTERDAM, NL, vol. 31, no. 2, 1 novembre 1979 (1979-11-01), pages 189-192, XP024537518, ISSN: 0030-4018, DOI: DOI:10.1016/0030-4018(79)90301-8 [extrait le 1979-11-01]

## Description

La présente invention concerne une cavité laser modulaire dédié au couplage cohérent passif de faisceaux laser, de haute intensité, au moyen d'une extraction centrale par polarisation. Elle concerne également une source laser comprenant une telle cavité laser.

On sait qu'une cavité laser a pour fonction d'engendrer et d'extraire un rayonnement laser et comporte à cet effet, notamment :
- deux miroirs se faisant face de manière à délimiter ladite cavité laser ; et
- au moins un élément actif (ou amplificateur laser), qui est agencé entre ces deux miroirs et qui est susceptible d'absorber un faisceau de pompage pour amplifier un faisceau laser se propageant selon un axe de propagation.

La présente invention s'applique au couplage cohérent passif d'amplificateurs laser dans le but d'augmenter la brillance de la source. Á ce sujet il est fait référence aux documents US5,793,784 (Wagshul) et WO9856087 (Lobel).

La mise en phase passive de faisceaux laser est généralement réalisée en superposant totalement ou partiellement, intracavité (c'est-à-dire dans la cavité laser), en un point ou une zone donnée, les différents faisceaux à coupler provenant de milieux amplificateurs distincts et disposés en parallèle. Dès lors, à l'endroit de la superposition, une contrainte spatiale ou spectrale commune aux faisceaux est appliquée. Dans les instants précédant l'émission laser, sous l'action d'une ou plusieurs sources de pompage, les différents milieux amplificateurs émettent un bruit blanc sur toute la bande spectrale d'émission de ces milieux. En raison de la contrainte spatiale ou spectrale imposée dans la zone commune aux faisceaux, ce bruit blanc est filtré puis réamplifié au fil des allers-retours successifs dans la cavité. Le système laser organise automatiquement son spectre d'émission en réamplifiant uniquement les fréquences de résonance compatibles avec des pertes intracavité minimales. Ainsi, dès que le niveau de pertes après filtrage est inférieur au gain effectif dans le laser, l'émission laser se produit. L'extraction du ou des faisceaux utiles est toujours réalisée en aval du couplage par un coupleur de sortie.

Les systèmes laser avec mise en phase passive comportent généralement :
- au moins une source de pompage qui peut être issue de sources plutôt monochromatiques, dont le spectre d'émission est en accord avec le spectre d'absorption du milieu actif considéré (diode laser), ou bien une source large bande (lampes flash, soleil...) ;
- une pluralité de N éléments actifs (cristaux dopés, fibre dopée, cellule de gaz, semi-conducteur) disposés en parallèle dans une cavité laser commune ; et
- soit un élément optique séparateur ou combineur de faisceaux (lames séparatrices en cascade, élément diffractif) pour superposer les N faisceaux suivant un axe commun, soit un élément permettant de réaliser un filtrage spatial (diaphragme, grille de fils, lame gravée...) sur lequel les faisceaux sont superposés dans un plan commun (plan focal d'une lentille convergent, d'un prisme à facettes).

Différentes configurations de mise en phase passive existent :
- avec des lames séparatrices en cascade (ou architecture arborescente). Dans cette configuration, le système laser force les faisceaux élémentaires à interférer entre eux à leur intersection, au niveau des lames séparatrices, afin de ne conduire au final qu'à un faisceau unique ayant les mêmes caractéristiques spatiales que les faisceaux élémentaires, et dont l'intensité est théoriquement la somme des intensités des faisceaux élémentaires ;
- avec un couplage diffractif (« Dammann grating »). Dans cette configuration, les faisceaux élémentaires se croisent dans un plan où est disposé un élément diffractif jouant le rôle de séparatrice à voies multiples. Comme dans la configuration précédente, les faisceaux doivent interférer de façon constructive vers une voie commune et unique de laquelle doit émerger un faisceau dont l'intensité est proche de la somme des intensités des faisceaux élémentaires ;
- avec un filtrage spatial utilisant un miroir gravé ou une grille de fils opaques. Dans cette configuration, les différents faisceaux élémentaires se croisent dans un plan donné où est agencée une lame gravée ou une grille de fils opaques, matérialisant des minima d'intensité d'une figure d'interférence (ou de diffraction) particulière qui est celle que produiraient les différents faisceaux en se superposant s'ils étaient en phase. Cette figure, matérialisée par une gravure ou des fils infligeant des pertes aux différents faisceaux, impose alors à ces derniers de se mettre en phase pour minimiser ces pertes au fil des allers-retours dans la cavité ; et
- avec un filtrage spatial utilisant un diaphragme au foyer d'une lentille convergente. Dans cette configuration, les différents faisceaux élémentaires sont superposés au foyer d'une lentille convergente disposée de sorte à réaliser une transformée de Fourier. Au foyer de cette lentille est disposé un diaphragme de diamètre bien défini. Lorsque les faisceaux élémentaires sont en phase, la figure de diffraction résultante au foyer de la lentille comporte un lobe central étroit prédominant et de petits lobes satellites. Le diamètre du diaphragme est donc ajusté de manière à laisser passer uniquement un faisceau de la taille du lobe central espéré, afin d'imposer aux faisceaux élémentaires de se mettre en phase pour minimiser les pertes.

Dans les exemples précédents, les contraintes imposées intracavité permettent de mettre en phase les faisceaux élémentaires et, par conséquent, de les rendre cohérents entre eux.

L'idée première d'une mise en phase de sources laser est de pouvoir aller au-delà de la puissance ou de l'énergie laser pouvant être délivrée par une source unique, tout en maintenant une bonne qualité de faisceau. En effet, lorsque la limite énergétique est atteinte pour une source élémentaire unique, l'idée est de coupler de façon cohérente un nombre N de telles sources laser élémentaires, puis de recombiner les N faisceaux émis en un seul faisceau dont l'intensité est décuplée.

Actuellement, pour s'approcher de puissances très élevées (gamme de 100 KW) en régime continu, des systèmes de mise en phase actifs nécessitant une analyse et un asservissement permanent de la phase de chaque émetteur sont préférés, bien qu'ils soient très complexes, coûteux et encombrants. Dans ces systèmes, les N émetteurs sont répartis suivant une matrice 2D périodique et la recombinaison est réalisée en champ lointain.

En revanche, en régime pulsé (type nanosecondes), ces dispositifs actifs ne semblent pas être compatibles, en raison de la brièveté de l'événement comparée à la dynamique trop lente d'établissement du phasage commun actif, liée au dispositif électronique d'asservissement et de traitement informatique des informations. Actuellement, pour s'approcher d'énergies ultimes de quelques kilojoules, on utilise un petit oscillateur pulsé suivi d'une nombreuse série d'amplificateurs multi-passages.

Dans le cadre des sources laser conventionnelles à très fort gain, à très forte puissance en régime continu (quelques KW) ou bien à forte énergie en régime pulsé (quelques J), les niveaux de densité de puissance sont souvent très élevés, voire même proches de la limite de tenue au flux de certains composants ou traitements optiques. Aussi, si l'on souhaite faire évoluer ces sources laser pour atteindre des énergies ultimes au moyen de techniques de couplage cohérent intracavité passives telles qu'existant actuellement, qui nécessitent une superposition localisée des différents faisceaux à coupler sur un ou plusieurs composants optiques, il apparaît de sérieux problèmes de tenue au flux de ces composants.

Pour remédier à ces problèmes, il importe :
- soit de disposer de nouveaux matériaux et traitements optiques supportant la fluence nécessaire ;
- soit de diminuer la fluence des faisceaux dans la zone sensible de superposition.

Cependant:
- la tenue au flux des matériaux optiques ou des traitements doit être d'autant plus grande que le nombre de lasers à coupler est important, ce qui est rapidement limitant ; et
- concernant la diminution de la fluence des faisceaux, on peut imaginer de simplement dilater leur surface, mais cette dilatation implique des tailles de composants optiques d'autant plus grandes que le nombre de lasers à coupler est important. De plus, cette dilatation pose aussi des problèmes de stabilité de cavité laser et de maintien de la qualité de faisceau dans le cas de lasers solides massifs.

La présente invention concerne une nouvelle architecture de cavité laser, utilisant des milieux amplificateurs préférentiellement à fort gain, dédiés aux hautes puissances ou énergies, associée à une technique de couplage cohérent passive, qui permet de fortement repousser (sans contrainte de matériau supplémentaire) la limitation, par la tenue au flux de composants optiques, du nombre de lasers pouvant être couplés.

Plus précisément, la présente invention concerne une cavité laser qui permet de repousser la limitation du nombre d'éléments actifs pouvant être couplés, liée à la problématique de tenue au flux des composants optiques, lorsque la technique de couplage cohérent utilisée nécessite le regroupement des différents faisceaux élémentaires sur un ou plusieurs éléments limités en fluence.

Selon l'invention, ladite cavité laser permettant d'engendrer au moins un rayonnement laser et comportant :
- deux miroirs se faisant face de manière à délimiter ladite cavité laser ;
- une pluralité d'éléments actifs qui sont agencés parallèlement entre eux et dont les axes de propagation sont également parallèles entre eux, lesdits éléments actifs étant agencés entre ces deux miroirs et étant susceptibles d'être soumis à un pompage pour amplifier des faisceaux laser ; et
- une unité d'extraction qui est agencée dans ladite cavité laser et qui est formée de manière à réaliser une extraction centrale des faisceaux laser pour obtenir le rayonnement laser,
est remarquable en ce que ladite unité d'extraction comprend au moins un polariseur, qui est incliné par rapport auxdits axes de propagation, ainsi qu'au moins un élément à retard, qui est agencé longitudinalement en amont dudit polariseur (soit entre lesdits éléments actifs et ledit polariseur, soit en amont desdits éléments actifs), et en ce que ladite unité d'extraction est agencée dans ladite cavité laser de manière à la diviser longitudinalement en deux parties fonctionnelles, à savoir une première partie comprenant lesdits éléments actifs, qui réalise une amplification desdits faisceaux laser, et une seconde partie qui réalise un couplage cohérent desdits faisceaux laser.

Le concept d'architecture conforma à l'invention prévoit donc la possibilité de diviser la cavité laser, en ligne, en deux parties fonctionnelles, dans laquelle l'extraction des faisceaux laser s'effectue par le centre, une première partie ayant pour fonction de réaliser l'amplification en parallèle des différents faisceaux laser et la seconde partie ayant pour fonction première de réaliser le couplage cohérent de ces faisceaux. Selon l'invention, la cavité laser est formée de manière à réaliser un couplage cohérent par superposition des faisceaux laser dans ladite seconde partie.

L'extraction centrale des faisceaux laser élémentaires (c'est-à-dire issus desdits éléments actifs individuels de la cavité laser) est réalisée après la phase d'amplification, de sorte que leur intensité soit fortement diminuée, dans des proportions du taux d'extraction considéré, en arrivant dans la zone commune (seconde partie) où le couplage cohérent des faisceaux est à effectuer.

Ainsi, une fois l'intensité de chaque faisceau élémentaire fortement réduite, la superposition de ceux-ci dans la zone commune peut être réalisée de façon sécurisée compte tenu de la limitation en fluence.

Comme indiqué ci-dessus, l'extraction centrale des faisceaux est réalisée par l'association d'un polariseur et d'un élément à retard de phase (de préférence une lame à retard de phase de type λ/4 ou quart d'onde) placé entre le polariseur et le miroir de fond de cavité fermant la zone amplificatrice. Ainsi, dans la mesure où le milieu amplificateur utilisé (éléments actifs) n'est pas ou très peu biréfringent, une rotation de l'élément à retard de phase peut permettre de faire évoluer continûment le facteur de surtension de la cavité laser (c'est-à-dire le pourcentage du flux en provenance des éléments actifs amplificateurs qui reste dans la cavité en traversant le polariseur) depuis 0% jusqu'à 100%. En effet, un faisceau polarisé rectilignement par le polariseur effectue un double passage par cet élément à retard de phase, qui va avoir pour effet de faire tourner d'un certain angle l'état de polarisation du faisceau, suivant l'orientation choisie de ses axes neutres. Au retour, la portion du faisceau polarisée suivant le même axe que celui du polariseur sera transmise par le polariseur et continue, par conséquent, de circuler dans la cavité. Au contraire, la portion du faisceau polarisée perpendiculairement à l'axe du polariseur sera rejetée par ce dernier, ce qui permet de réaliser l'extraction centrale du faisceau au moyen de la polarisation.

Par ailleurs :
- dans une première variante de réalisation, ladite unité d'extraction comprend une pluralité d'ensembles formés d'un polariseur et d'un élément à retard, à savoir un ensemble distinct pour chacun desdits éléments actifs (amplificateurs) ; et
- dans une seconde variante de réalisation, ladite unité d'extraction comprend un unique ensemble formé d'un polariseur et d'un élément à retard, qui est commun à tous lesdits éléments actifs (amplificateurs) de la cavité laser.

La présente invention apporte un avantage important dans le cas d'une utilisation de milieux amplificateurs (éléments actifs) à fort gain longitudinal permettant une forte extraction du faisceau par aller-retour. En effet, une forte extraction centrale permet de diminuer fortement l'intensité du faisceau en aval de l'extraction. Par conséquent, le nombre de faisceaux pouvant être regroupés dans la cavité laser pour atteindre la limite d'endommagement est accru.

A titre d'exemple, on peut considérer le cas où la source laser (utilisant la cavité laser conforme à l'invention) est constituée d'éléments actifs (disposés en parallèle) identiques et les faisceaux générés présentent une fluence qui est à la limite de tenue au flux des composants optiques traversés. Si, dans cette situation, le facteur de surtension est de 20%, c'est-à-dire que 20% du flux en provenance des milieux amplificateurs reste dans la cavité laser en traversant le polariseur et que 80% de ce flux est extrait de la cavité laser par ce même polariseur, alors le nombre maximal de faisceaux pouvant être regroupés ou superposés dans la zone de couplage (seconde partie de la cavité laser) est de cinq pour retrouver le niveau de fluence toléré par la source laser. De la même façon, si le niveau de surtension imposé dans la cavité laser est de 5% avec les mêmes contraintes de fluence que précédemment, le nombre de faisceaux pouvant être couplés est de vingt.

La technique d'extraction centrale conforme à l'invention est compatible avec toutes les techniques de couplage cohérent connues, nécessitant une superposition intracavité de faisceaux laser.

Par ailleurs, dans un mode de réalisation particulier, la cavité laser conforme à l'invention comporte, de plus, au moins un élément déclencheur qui est agencé dans ladite seconde partie, à savoir soit des éléments déclencheurs sur chacune des différentes voies avant superposition, soit un unique élément déclencheur à l'endroit de la superposition des faisceaux laser. Ce mode de réalisation particulier permet de réaliser un système laser de type «Q-switch» pouvant émettre une pluralité de faisceaux impulsionnels en phase.

En outre, avantageusement, la cavité laser conforme à l'invention comporte, de plus, au moins un élément actif auxiliaire qui est agencé dans ladite seconde partie, ce qui permet d'augmenter le taux d'extraction de faisceaux au niveau du polariseur.

Par ailleurs, dans un mode de réalisation préféré, ladite cavité laser comporte également des moyens pour agencer les faisceaux laser parallèlement entre eux, en amont de l'unité d'extraction ou bien via l'unité d'extraction, de sorte qu'ils se recombinent à l'extérieur de ladite cavité laser (après l'extraction), avec une meilleure efficacité.

La présente invention concerne également une source laser du type comportant au moins :
- une cavité laser comprenant des éléments actifs ;
- un système de pompage pour émettre au moins un faisceau de pompage ; et
- un système optique de transport pour diriger le faisceau de pompage vers lesdits éléments actifs de ladite cavité laser.

Selon l'invention, cette source laser est remarquable en ce que ladite cavité laser est du type précité.

Les figures du dessin annexé feront bien comprendre comment l'invention peut être réalisée. Sur ces figures, des références identiques désignent des éléments semblables.

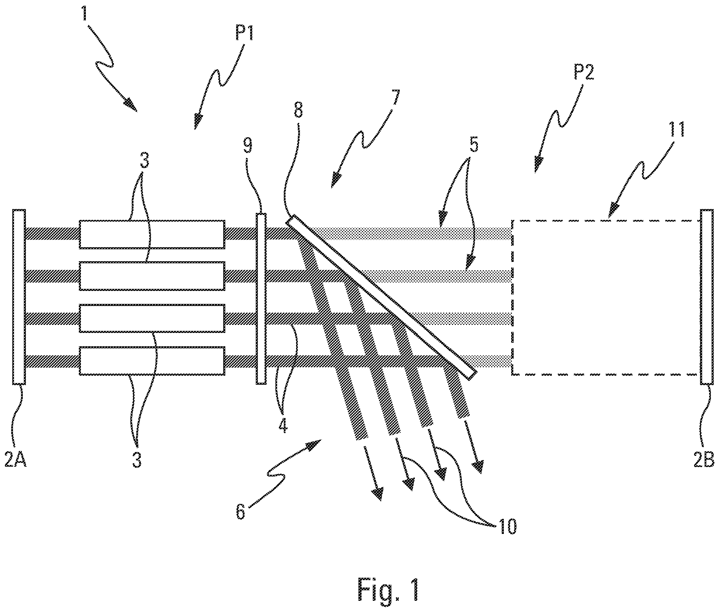

Les figures 1 à 5 montrent schématiquement des modes de réalisation particuliers de cavités lasers conformes à l'invention.

La cavité laser 1 (ou cavité optique) conforme à l'invention et représentée schématiquement sur les figures 1 à 5, dans différents modes de réalisation, est destinée à être utilisée dans une source laser.

Une telle source laser (non représentée) comporte, de façon usuelle, en plus de ladite cavité laser 1, notamment :
- un système de pompage usuel, qui comprend des moyens susceptibles d'émettre au moins un faisceau de pompage ; et
- un système optique de transport usuel, qui est destiné à diriger le faisceau de pompage émis par le système de pompage dans ladite cavité laser 1, de manière à réaliser le pompage d'éléments actifs 3 précisés ci-dessous.

Ladite cavité laser 1 comporte, de façon usuelle :
- deux miroirs 2A et 2B qui se font face et qui délimitent cette cavité laser 1 ; et
- une pluralité d'éléments actifs 3. Un élément actif 3 est un élément amplificateur. Chaque élément amplificateur comprend un matériau dopé susceptible d'absorber le faisceau de pompage (non représenté) émis par le système de pompage pour amplifier un faisceau laser 4 correspondant qui se propage selon un axe de propagation 5.

La cavité laser 1 confère au rayonnement laser 6 qui est extrait de la manière précisée ci-dessous, ses caractéristiques de directivité (flèche 10) et de géométrie.

Lesdits miroirs 2A et 2B sont complètement réfléchissants, et ladite cavité laser 1 comporte, de plus, une unité d'extraction 7 qui est agencée dans ladite cavité laser 1 et qui est formée de manière à réaliser une extraction centrale des faisceaux laser 4 pour obtenir ledit rayonnement laser 6. Par extraction centrale, on considère une extraction qui est réalisée sensiblement au centre de la cavité laser 1, et non pas latéralement à travers un miroir d'extrémité tel que le miroir 2B.

Par ailleurs, ladite unité d'extraction 7 comprend :
- au moins un polariseur 8, qui est incliné par rapport auxdits axes de propagation 5 (parallèles entre eux) ; et
- au moins un élément 9 à retard de phase, qui est agencé longitudinalement en amont dudit polariseur 8. Ledit élément 9 peut être agencé en amont des éléments actifs 3. De préférence, comme représenté sur les figures, il est agencé longitudinalement entre lesdits éléments actifs 3 et ledit polariseur 8 et est traversé par les faisceaux laser 4. De préférence, cet élément à retard 9 est une lame quart d'onde. Un élément 9 à retard de phase permet d'engendrer un déphasage dans un faisceau laser 4 la traversant.

Le polariseur 8 est un polariseur par séparation de faisceaux qui sépare le faisceau incident en deux faisceaux de polarisations différentes.

Dans le cadre de la présente invention, comme représenté sur les figures 1 à 5, ladite cavité laser 1 comporte une pluralité d'éléments actifs 3 qui sont agencés parallèlement et dont les axes de propagation 5 des faisceaux laser 4 correspondants sont parallèles entre eux. De plus, selon l'invention, l'unité d'extraction 7 est agencée dans ladite cavité laser 1 de manière à la diviser longitudinalement en deux parties fonctionnelles P1 et P2, à savoir une partie P1 (à gauche sur les figures) qui comprend lesdits éléments actifs 3 et qui réalise l'amplification desdits faisceaux laser 4, et une partie P2 (à droite sur les figures) qui réalise un couplage cohérent desdits faisceaux laser 4, comme précisé ci-dessous.

Le concept d'architecture précité prévoit donc la possibilité de diviser la cavité laser 1, en ligne, en deux parties fonctionnelles P1 et P2, dans laquelle l'extraction des faisceaux laser 4 s'effectue par le centre, une première partie P1 ayant pour fonction de réaliser l'amplification en parallèle des différents faisceaux laser 4 et la seconde partie P2 ayant pour fonction première de réaliser le couplage cohérent de ces faisceaux 4. Selon l'invention, la cavité laser 1 est formée de manière à réaliser un couplage cohérent par superposition des faisceaux laser 4 dans ladite seconde partie P2, comme illustré par une zone commune 11 sur les figures 1 à 5.

L'extraction centrale des faisceaux laser 4 élémentaires (c'est-à-dire issus desdits éléments actifs 3 individuels) est, de préférence, réalisée après la phase d'amplification, de sorte que leur intensité est fortement diminuée en arrivant dans la zone commune 11 où le couplage cohérent des faisceaux 4 est à effectuer.

Ainsi, une fois l'intensité de chaque faisceau élémentaire 4 fortement réduite, la superposition de ceux-ci dans la zone commune 11 peut être réalisée de façon sécurisée compte tenu de la limitation en fluence des composants optiques vus par ce regroupement de faisceaux 4.

Comme indiqué ci-dessus, l'extraction centrale des faisceaux 4 est réalisée par l'association d'un polariseur 8 et d'un élément 9 à retard de phase (de préférence une lame à retard de phase de type λ/4 ou quart d'onde) placé entre le polariseur 8 et le miroir 2A de fond de cavité fermant la zone amplificatrice. Ainsi, dans la mesure où le milieu amplificateur utilisé (éléments actifs 3) n'est pas ou très peu biréfringent, une rotation de l'élément 9 à retard de phase peut permettre de faire évoluer continûment le facteur de surtension de la cavité laser 1 (c'est-à-dire le pourcentage du flux en provenance des éléments actifs amplificateurs 3 qui reste dans la cavité 1 en traversant le polariseur 8) depuis 0% jusqu'à 100%. En effet, un faisceau polarisé rectilignement par le polariseur 8 effectue un double passage par cet élément 9, qui va avoir pour effet de faire tourner d'un certain angle l'état de polarisation du faisceau, suivant l'orientation choisie de ses axes neutres. Au retour, la portion du faisceau polarisée suivant le même axe que celui du polariseur 8 sera transmise par le polariseur 8 et continuera, par conséquent, de circuler dans la cavité 1. Au contraire, la portion du faisceau polarisée perpendiculairement à l'axe du polariseur 8 sera rejetée par ce dernier, ce qui permet de réaliser l'extraction centrale du faisceau au moyen de la polarisation.

Par ailleurs, dans une première variante de réalisation (non représentée), ladite unité d'extraction comprend une pluralité d'ensembles formés d'un polariseur et d'un élément à retard, à savoir un ensemble distinct pour chacun desdits éléments actifs (amplificateurs).

En outre, dans une seconde variante de réalisation (représentée sur les figures 1 à 5), ladite unité d'extraction 7 comprend un unique ensemble formé d'un polariseur 8 et d'un élément à retard 9, qui est commun à tous lesdits éléments actifs 3 (amplificateurs) de ladite cavité laser 1.

On notera que la technique d'extraction centrale conforme à l'invention est compatible avec toutes les techniques de couplage cohérent connues nécessitant une superposition, intracavité, de faisceaux laser 4.

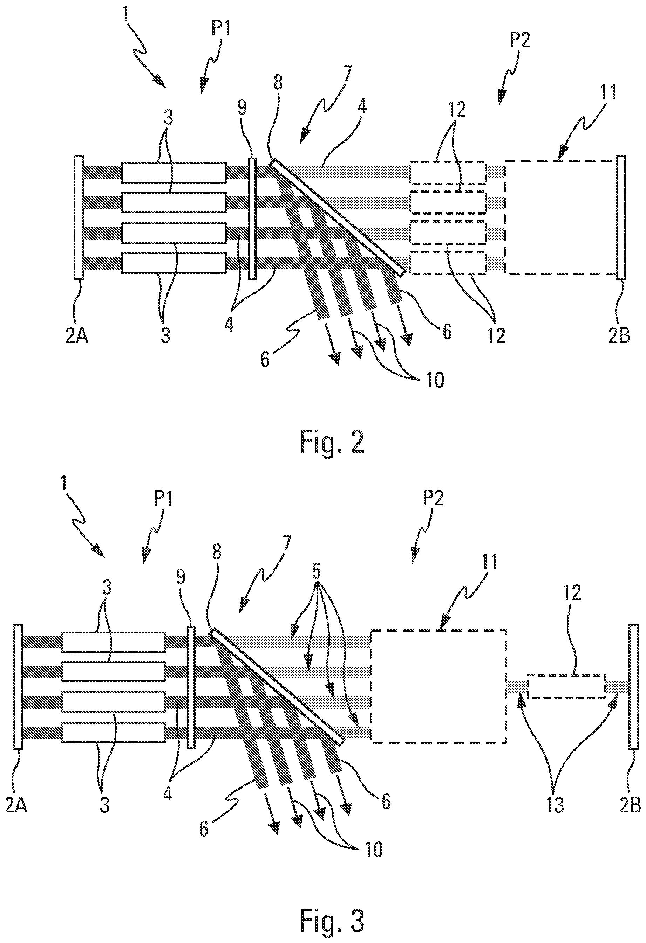

Par ailleurs, comme représenté sur les figures 2 et 3, la cavité laser 1 peut comporter, de plus, au moins un élément déclencheur 12 qui est agencé dans la partie P2 et qui permet d'émettre une pluralité de faisceaux impulsionnels en phase. Ce mode de réalisation particulier permet de réaliser un système laser du type «Q-switch». Dans ce cas :
- dans une première variante de réalisation représentée sur la figure 2, la cavité laser 1 comporte une pluralité de déclencheurs 12, dont chacun est monté sur une des voies (d'axe 5) de la cavité laser 1. On entend par voie, la direction de propagation qui est associée à un élément actif 3 et selon lequel est émis le faisceau laser 4 associé à cet élément actif 3 ; et
- dans une seconde variante de réalisation représentée sur la figure 3, ladite cavité laser 1 comporte un unique élément déclencheur 12 qui est commun à tous les éléments actifs et qui est agencé sur une voie 13 où les faisceaux laser 4 sont recombinés dans la partie P2.

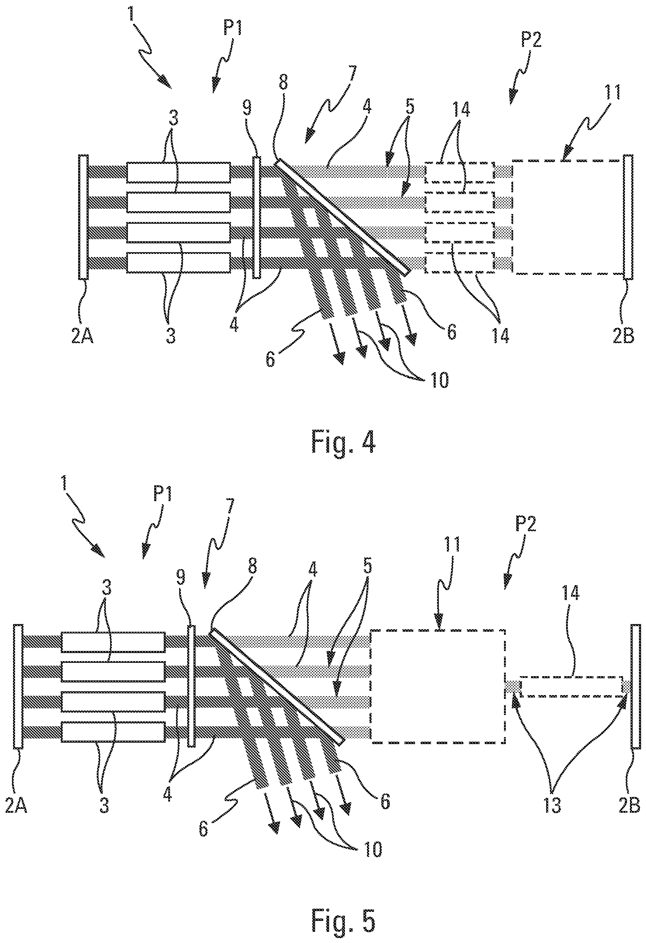

Par ailleurs, dans un mode de réalisation particulier, ladite cavité laser 1 peut comporter des éléments actifs (amplificateurs) supplémentaires 14 qui sont agencés dans ladite partie P2 de la cavité laser 1, comme représenté sur les figures 4 et 5.

Dans une première variante de réalisation représentée sur la figure 4, la cavité laser 1 comporte une pluralité d'éléments actifs auxiliaires 14, dont chacun est associé à l'une des voies de la cavité laser 1. En revanche, dans une seconde variante de réalisation représentée sur la figure 5, la cavité laser 1 comporte un seul élément actif auxiliaire 14 qui est agencé sur une voie 13 où sont recombinés les faisceaux 4 individuels.

Ce mode de réalisation particulier permet d'augmenter le taux d'extraction des faisceaux 4 au niveau du polariseur 8. L'amplification supplémentaire (due aux éléments actifs auxiliaires 14) doit être telle que les intensités des faisceaux regroupés après un aller-retour dans la cavité laser 1 soient identiques à ce qu'elles auraient été sans modifier le taux d'extraction et sans ajouter l'amplification supplémentaire. Ainsi, le niveau de surtension est artificiellement conservé par l'intermédiaire de l'amplification additionnelle, tout en permettant d'extraire plus d'énergie de la source laser.

On notera qu'une fois couplés de manière cohérente à l'intérieur de la cavité laser 1, les différents faisceaux extraits par le centre de cette cavité laser 1 peuvent être recombinés. Ces faisceaux lasers 4, désormais cohérents, peuvent être recombinés en champs lointains, en espace libre, sans avoir à traverser de composants supplémentaires. Pour ce faire, la cavité laser 1 est formée de manière à agencer les faisceaux juste avant l'extraction de façon périodique, suivant une matrice bidimensionnelle de préférence. De cette manière, les rayonnements 6 peuvent interférer en champs lointains, de manière à former une figure de diffraction contenant un pic central intense accompagné de lobes satellites d'intensité moindre, suivant la qualité de la répartition spatiale et du pointage des faisceaux élémentaires, en sortie de la cavité laser 1.

La présente invention apporte donc un avantage important dans le cas d'une utilisation de milieux amplificateurs (éléments actifs 3) à fort gain longitudinal permettant une forte extraction du faisceau par aller-retour. En effet, une forte extraction centrale permet de diminuer fortement l'intensité du faisceau 4 en aval de l'extraction. Par conséquent, le nombre de faisceaux 4 pouvant être regroupés dans la cavité laser 1 pour atteindre la limite d'endommagement est accru.

## Revendications

1. Cavité laser permettant d'engendrer au moins un rayonnement laser (6) et comportant :
- au moins deux miroirs (2A, 2B) ;
- une pluralité d'éléments actifs (3) comportant des axes de propagation (5), lesdits éléments actifs (3) étant agencés entre ces deux miroirs (2A, 2B) et étant susceptibles d'être soumis à un pompage pour amplifier des faisceaux laser (4) ; et
- une unité d'extraction (7) qui est agencée dans ladite cavité laser (1), qui comprend au moins un polariseur (8) incliné par rapport auxdits axes de propagation (5) et au moins un élément à retard (9) agencé longitudinalement en amont dudit polariseur (8), et qui est formée de manière à réaliser une extraction centrale des faisceaux laser (4) pour obtenir le rayonnement laser, ladite unité d'extraction (7) étant agencée dans ladite cavité laser (1) de manière à la diviser longitudinalement en deux parties fonctionnelles (P1, P2), à savoir une première partie (P1) comprenant lesdits éléments actifs (3) qui réalise une amplification desdits faisceaux laser (4) et une seconde partie (P2),
**caractérisée en ce que** ladite seconde partie (P2) de la cavité laser (1) est configurée pour réaliser un couplage cohérent par superposition desdits faisceaux laser (4), dont l'intensité est réduite par l'extraction centrale réalisée par l'unité d'extraction (7).

2. Cavité laser selon la revendication 1,
**caractérisée en ce que** ladite unité d'extraction (7) comprend une pluralité d'ensembles formés d'un polariseur et d'un élément à retard, à savoir un ensemble distinct pour chacun desdits éléments actifs.

3. Cavité laser selon la revendication 1,
**caractérisée en ce que** ladite unité d'extraction (7) comprend un unique ensemble formé d'un polariseur (8) et d'un élément à retard (9), qui est commun à tous lesdits éléments actifs (3).

4. Cavité laser selon l'une quelconque des revendications 1à 3,
**caractérisée en ce qu'**elle comporte, de plus, au moins un élément déclencheur (12) qui est agencé dans ladite seconde partie (P2), pour émettre des faisceaux impulsionnels en phase.

5. Cavité laser selon l'une quelconque des revendications 1 à 4,
**caractérisée en ce qu'**elle comporte, de plus, au moins un élément actif auxiliaire (14) qui est agencé dans ladite seconde partie (P2).

6. Cavité laser selon l'une quelconque des revendications 1 à 5,
**caractérisée en ce qu'**elle comporte des moyens pour former les faisceaux laser (4) en amont de l'unité d'extraction de sorte qu'ils se recombinent à l'extérieur de ladite cavité laser (1) après l'extraction.

7. Source laser comportant :
- une cavité laser (1) comprenant des éléments actifs (3) ;
- un système de pompage pour émettre au moins un faisceau de pompage ; et
- un système optique de transport pour diriger le faisceau de pompage vers lesdits éléments actifs (3) de ladite cavité laser (1),
**caractérisée en ce que** ladite cavité laser (1) est du type de celle spécifiée sous l'une quelconque des revendications 1 à 6.

## Patentansprüche

1. Laserkavität, die es ermöglicht, mindestens eine Laserstrahlung (6) zu erzeugen und die umfasst:
- mindestens zwei Spiegel (2A, 2B);
- mehrere aktive Elemente (3), die Ausbreitungsachsen (5) umfassen, wobei die aktiven Elemente (3) zwischen den beiden Spiegeln (2A, 2B) angeordnet sind und fähig sind, einem Pumpen ausgesetzt zu werden, um Laserstrahlen (4) zu amplifizieren; und
- eine Extraktionseinheit (7), die in der Laserkavität (1) angeordnet ist, die mindestens einen Polarisator (8), der in Bezug auf die Ausbreitungsachsen (5) geneigt ist, und mindestens ein Verzögerungselement (9) umfasst, das longitudinal stromaufwärts vom Polarisator (8) angeordnet ist, und die ausgebildet ist, um eine zentrale Extraktion von Laserstrahen (4) durchzuführen, um die Laserstrahlung zu erhalten, wobei die Extraktionseinheit (7) in der Laserkavität (1) angeordnet ist, um sie longitudinal in zwei funktionelle Teile (P1, P2) zu unterteilen, nämlich einen ersten Teil (P1), der die aktiven Elemente (3), die die Verstärkung der Laserstrahlen (4) durchführen, und einen zweiten Teil (P2) umfasst,
**dadurch gekennzeichnet, dass** der zweite Teil (P2) der Laserkavität (1) konfiguriert ist, um eine kohärente Kopplung durch eine Überlagerung der Laserstrahlen (4) durchzuführen, deren Intensität durch die zentrale Extraktion verringert wird, die von der Extraktionseinheit (7) durchgeführt wird.

2. Laserkavität nach Anspruch 1,
**dadurch gekennzeichnet, dass** die Extraktionseinheit (7) mehrere Anordnungen umfasst, die aus einem Polarisator und einem Verzögerungselement gebildet sind, nämlich eine separate Anordnung für jedes der aktiven Elemente.

3. Laserkavität nach Anspruch 1,
**dadurch gekennzeichnet, dass** die Extraktionseinheit (7) eine einzige Anordnung umfasst, die aus einem Polarisator (8) und einem Verzögerungselement (9) gebildet ist, das allen aktiven Elementen (3) gemeinsam ist.

4. Laserkavität nach einem der Ansprüche 1 bis 3,
**dadurch gekennzeichnet, dass** sie mindestens ein Auslöseelement (12) umfasst, das in dem zweiten Teil (P2) angeordnet ist, um gepulste Strahlen in Phase zu emittieren.

5. Laserkavität nach einem der Ansprüche 1 bis 4,
**dadurch gekennzeichnet, dass** sie überdies mindestens ein aktives Hilfselement (14) umfasst, das in dem zweiten Teil (P2) angeordnet ist.

6. Laserkavität nach einem der Ansprüche 1 bis 5,
**dadurch gekennzeichnet, dass** sie Mittel zur Bildung der Laserstrahlen (4) stromaufwärts von der Extraktionseinheit umfasst, so dass sie sich außerhalb der Laserkavität (1) nach der Extraktion rekombinieren.

7. Laserquelle, die umfasst:
- eine Laserkavität (1), die aktive Elemente (3) umfasst;
- ein Pumpsystem, um mindestens einen Pumpstrahl zu emittieren; und
- ein optisches Transportsystem, um den Pumpstrahl zu den aktiven Elementen (3) der Laserkavität (1) zu richten,
**dadurch gekennzeichnet, dass** die Laserkavität (1) von diesem Typ ist, wie er in einem der Ansprüche 1 bis 6 angegeben ist.

## Claims

1. Laser cavity, which makes it possible to produce at least one laser ray (6) and which comprises:
- at least two mirrors (2A, 2B);
- a plurality of active elements (3) having propagation axes (5), said active elements (3) being arranged between these two mirrors (2A, 2B) and being able to undergo pumping so as to amplify the laser beams (4); and
- an extraction unit (7), which is arranged in said laser cavity (1), which comprises at least one polariser (8) which is at an inclination to said propagation axes (5), and at least one retardation element (9) which is arranged longitudinally upstream from said polariser (8), and which is formed so as to carry out a central extraction of the laser beams (4) to obtain the laser ray, said extraction unit (7) being arranged in said laser cavity (1) so as to divide it longitudinally into two functional parts (P1, P2), of which a first part (P1) comprising said active elements amplifies said laser beams (4) and a second part (P2),
**characterised in that** said second part (P2) of the laser cavity (1) is arranged for coherently coupling by superposition said laser beams (4), the intensity of which is decreased by central extraction carried out by the extraction unit (7).

2. Laser cavity according to claim 1, **characterised in that** said extraction unit (7) comprises a plurality of assemblies formed by a polariser and a retardation element, namely a separate assembly for each of said active elements.

3. Laser cavity according to claim 1, **characterised in that** said extraction unit (7) comprises a single assembly formed by a polariser (8) and a retardation element (9), which is common to all of said active elements (3).

4. Laser cavity according to any one of claims 1 to 3, **characterised in that** it further comprises at least one trigger element (12) which is arranged in the second part (P2), for emitting pulsed beams in phase.

5. Laser cavity according to any one of claims 1 to 4, **characterised in that** it further comprises at least one auxiliary active element (14) which is arranged in said second part (P2).

6. Laser cavity according to any one of claims 1 to 5, **characterised in that** it comprises means for shaping the laser beams (4) upstream from the extraction unit, in such a way that they combine outside said laser cavity (1) after the extraction.

7. Laser source, comprising
- a laser cavity (1) comprising active elements (3);
- a pump system for emitting at least one pump beam; and
- an optical transport system for directing the pump beam towards said active elements (3) of said laser cavity (1),
**characterised in that** said laser cavity (1) is of the type specified in any one of claims 1 to 6.
